Europäisches Patentamt

European Patent Office

Office européen des brevets

(11) Publication number: **0 405 643 A2**

# EUROPEAN PATENT APPLICATION

(21) Application number: 90201560.1

(22) Date of filing: 18.06.90

(51) Int. Cl.⁵: **B30B 9/22**

(30) Priority: 29.06.89 IT 4685589

(43) Date of publication of application:
02.01.91 Bulletin 91/01

(84) Designated Contracting States:
AT BE CH DE DK ES FR GB GR IT LI LU NL SE

(71) Applicant: STATION OENOTECHNIQUE DE CHAMPAGNE
B. P. 1031
F-51318 Epernay Cédex(FR)

Applicant: DEFRANCESCHI S.P.A.
Zona Artigianale-Industriale, 11
I-39051 Bronzolo (Bolzano)(IT)

(72) Inventor: Lebarbier, Jean-Marie
12 Rue Malakoff
F-51200 Epernay(FR)
Inventor: Garavini, Daniele
V. le Baccarini, 19
I-48020 Sant'Agata Sul Santerno Ravenna(IT)

(74) Representative: Corradini, Corrado et al
Studio Ing. C. CORRADINI & C. S.r.l. 4, Via
Dante Alighierieri
I-42100 Reggio Emilia(IT)

(54) Membrane press with several doors.

(57) A membrane press comprises a cylindrical vessel (1) rotating about its longitudinal axis and divided into two diametrically opposing parts by a deformable membrane, and provided with one or more longitudinally aligned loading and discharge ports (3) with which there are associated respective convex doors (4) which are connected together and simultaneously driven with a circular to-and-fro movement parallel to the transverse outline of the vessel. The circular movement of said one or more doors is derived from a single drive unit (7) carried on said doors.

FIG. 4

# MEMBRANE PRESS WITH SEVERAL DOORS

This invention relates to improvements in membrane presses in general.

It is well known that presses commonly known as membrane presses have been used generally in the enological field for some time, these consisting of a horizontal cylindrical vessel rotating about its longitudinal axis and divided into two diametrically opposing parts by a deformable membrane. This latter is located in proximity to and approximately parallel to the axis of said vessel, to which it is peripherally fixed in a sealed manner.

One part of the vessel is intended to receive a pressurized fluid such as air, whereas the other part of the vessel is intended to receive the product to be pressed.

In such known presses the juice pressed from the product is collected via internal perforated channels which are connected either to a common external manifold or to a closed false bottom provided at one end of the vessel.

In said known membrane presses, one of the most widespread systems for loading the product to be pressed and discharging the dregs is to provide at least one convex door made to slide parallel to a generator of the vessel, for example by a pneumatic cylinder-piston unit to close/open a corresponding loading/discharge port.

As said at least one door is unable when in its open position to project beyond the vessel, the corresponding loading/discharge port must necessarily be of small length (relative to the vessel), which cannot exceed about one half the length of the vessel.

Basically, these dimensional limits give rise to problems both during the loading of the product to be pressed and during the discharge of the dregs. These problems are in the former case that it is difficult to obtain good filling of the vessel and the fact that this filling requires a long time, and in the latter case that the discharge of the dregs is both relatively difficult and lengthy.

It should be noted that such relatively long times are particularly inconvenient in this particular sector because during the grape harvest large quantities of grape have to be transferred in a relatively short time.

The main object of the present invention is therefore to provide a membrane press which obviates the aforesaid within the context of a simple, rational, reliable and robust design.

According to the invention the vessel of the press in question comprises one or more longitudinally aligned loading and discharge ports with which there are associated respective convex doors which are connected together and simultaneously driven with a circular to-and-fro movement parallel to the transverse outline of the vessel, by motor means carried on said doors. By virtue of said circular movement, the one or more doors are always located in the same longitudinal regions of the vessel, so that the corresponding loading and discharge ports can be dimensioned such that their overall length is very close to that of the vessel.

This obviates all the initially stated problems of the known art.

According to the invention the means for driving said one or more doors are preferable a motor-reduction gear unit fixed on one of the doors, with its output shaft being mounted idly on the other doors and provided with a pinion engaging with a curved rack transversely fixed on the vessel.

Moreover, between the vessel and the one or more doors there are provided members which allow the doors to slide without jamming and which act as reaction elements for the other doors during pressing.

The characteristics and constructional merits of the invention will be apparent from the detailed description given hereinafter with reference to the accompanying figures which show some embodiments thereof by way of non-limiting example.

Figure 1 is a schematic perspective view of a first two-door embodiment of a membrane press according to the invention.

Figure 2 shows a modification of the press of Figure 1.

Figure 3 is a schematic perspective view of a second three-door embodiment of a membrane press according to the invention.

Figure 4 is a section on the line IV-IV of Figure 2 to an enlarged scale.

Figure 5 is a schematic perspective view showing only the vessel of the press of Figure 2, in which the doors have been omitted to better show the guide and reaction members for said doors.

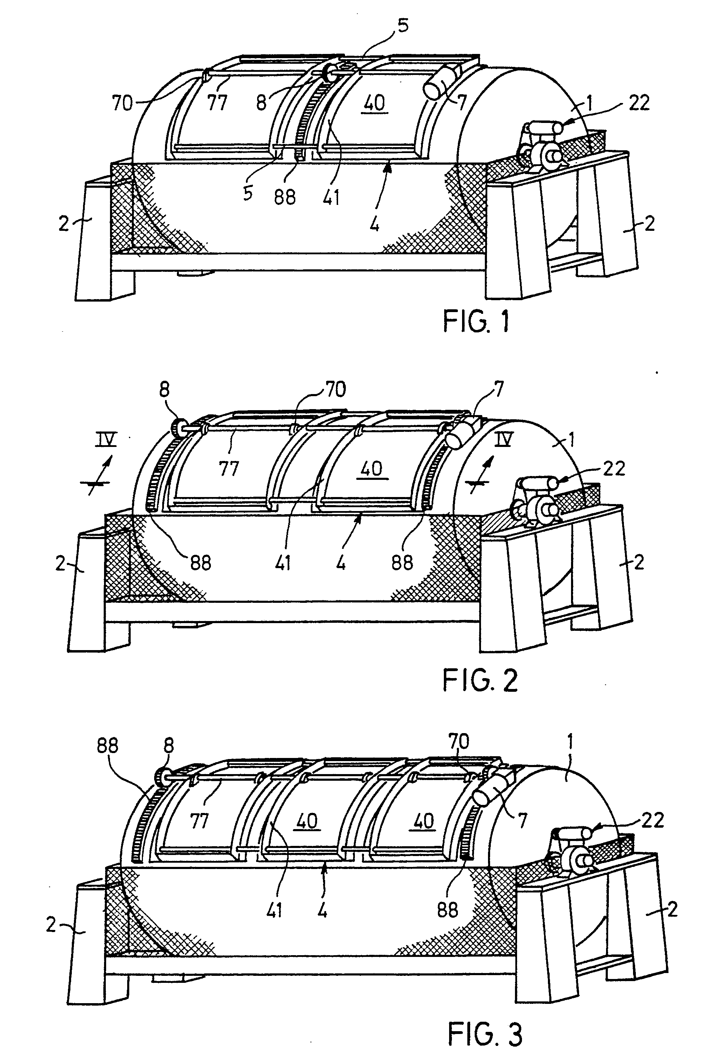

Said figures, and in particular Figures 1 to 3, show a cylindrical vessel 1 of horizontal axis mounted rotatable via two opposing coaxial pivots on respective uprights or shoulders 2.

The vessel 1 is divided into two diametrically opposing parts by a usual deformable membrane, the vessel 1 being rotated about itself by a convenient drive unit 22.

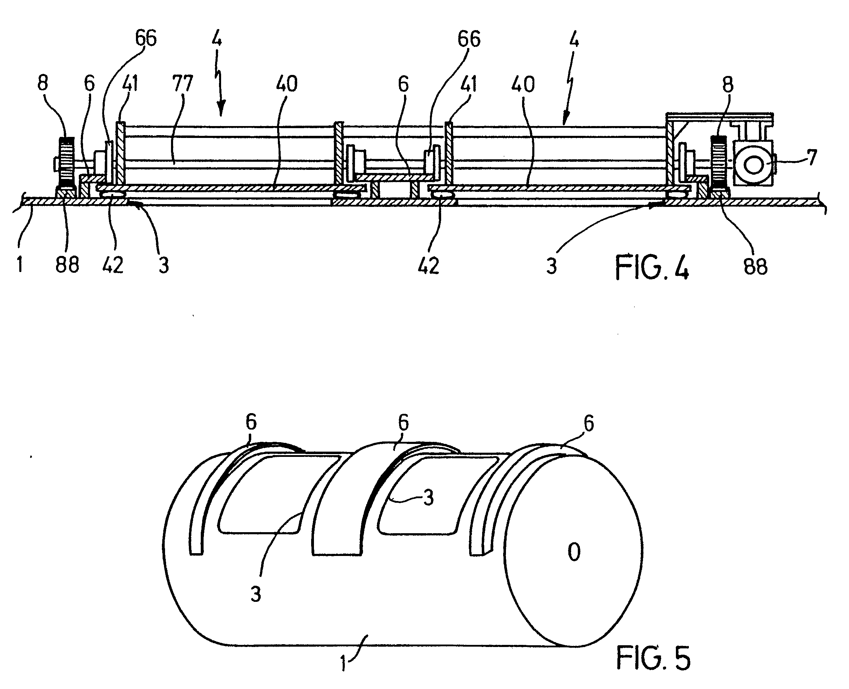

According to a first embodiment of the invention, the vessel 1 comprises two identical loading and discharge ports 3 which are longitudinally aligned (see Figures 4 and 5).

With each port there is associated a corresponding door 4 (see Figure 1), the two doors 4 being joined together by at least two robust longitudinal bars 5.

Specifically, each door 4 comprises a plate 40 in the form of a sector of a cylindrical wall having the same curvature as the vessel 1 (Figures 1, 2).

The plate 40 is externally strengthened by a perimetral frame 41 (Figure 4), along the outer perimetral edge of the inner surface of said plate there being fixed in known manner an air tube 42 which provides a seal during pressing (see Figure 4).

The air tube 42 is connected to a convenient pneumatic circuit for its pressurization and depressurization.

As can be seen in Figures 4 and 5, the opposing side edges of the plates 40 extend beyond the corresponding frame 41, where they lie between the vessel 1 and respective curved cheeks 6 fixed to this latter.

The cheeks 6 also act as rolling tracks for respective sets of flanged wheels 66 (Figure 4) which are mounted idly on corresponding side elements of the frames 41 of each door 4.

In addition, a motor-reduction gear unit 7 with its motor preferably of pneumatic type is mounted on one of said doors 4.

The output shaft 77 of said unit 7 is rotatably mounted on the doors 4 by convenient supports 70, in the embodiment shown in Figure 1 there being keyed on said shaft 77 a pinion 8 which engages with a curved rack 88 fixed to the vessel 2.

The rack 88 lies between the two loading and discharge ports 3, whereas in the modification shown in Figure 2, two racks 88 are provided, mounted to opposing sides of said two ports 3.

Finally, in the embodiment shown in Figure 3, three doors 4 are provided, with which two opposing side racks 88 are associated.

It should be noted that instead of the racks, chain pieces can be provided with which corresponding sprockets engage.

Moreover, more than three doors can be provided.

During their opening and closure travel, said doors 4 travel through circumferential arcs concentric to the vessel 1, proper sliding of the doors being ensured by the flanged wheels 66.

It should also be noted that the guide and rolling cheeks 6 for said flanged wheels 66 also perform the important function of support and reaction elements for the doors 4 during pressing.

The invention is not limited to the embodiments described and illustrated, but comprises all technical equivalents of the aforesaid means and their combinations, provided they are implemented within the context of the following claims.

## Claims

1. A membrane press, of the type comprising a horizontal cylindrical vessel (1) rotating about its longitudinal axis and divided into two diametrically opposing parts by a deformable membrane, characterised by comprising one or more longitudinally aligned loading and discharge ports (3) and corresponding convex doors (4) which are connected together, between said vessel (1) and said doors (4) there being provided means (88, 8) for subjecting these latter to a simultaneous opening and closure movement parallel to the transverse outline of the vessel.

2. A press as claimed in claim 1, characterised in that the opposing side edges of each door (4) are each located between the outer surface of the vessel (1) and a curved cheek (6) which is fixed to this latter and acts as a guide and rolling element for a corresponding set of flanged wheels (66) which are associated with said door (4) and rest against the outer face of said cheek (6).

3. A press as claimed in claim 1, characterised in that said means comprise at least one curved rack (88) fixed to the outside of the vessel (1), and a pinion (8) engaging with said rack and driven by a drive unit (7) mounted on one of said one or more doors (4).

4. A press as claimed in claim 1, characterised in that said means (88, 8) comprise at least one piece of chain fixed transversely to said vessel (1) and at least one sprocket engaging with said chain and driven by a drive unit (7) mounted on one of said one or more doors (4).

5. A press as claimed in claim 1, characterised by comprising at least two loading and discharge ports (3), said means (88, 8) being located between the adjacent edges of said two ports (3).

6. A press as claimed in claim 1, characterised by comprising at least two loading and discharge ports (3), there being associated with the opposing side edges of said at least two ports two curved racks or chains with which respective pinions or sprockets engage, these latter being driven by the same drive unit (7).

7. A press as claimed in the preceding claims, characterised in that said drive unit (7) comprises a motor-reduction gear unit, the motor of which is pneumatic.

FIG. 1

FIG. 2

FIG. 3

FIG. 4

FIG. 5

EP 0 405 643 A2